# EUROPEAN PATENT SPECIFICATION

(11) **EP 2 985 751 B1**
(45) Date of publication and mention of the grant of the patent: **11.12.2019**
(21) Application number: 14783406.3
(22) Date of filing: 03.04.2014
(51) Int. Cl.: G09F 9/00, B60K 35/00, G01D 13/04

(54) **DISPLAY DEVICE**
ANZEIGEVORRICHTUNG
DISPOSITIF D'AFFICHAGE

(30) Priority: 09.04.2013 JP 2013081090
(43) Date of publication of application: 17.02.2016
(73) Proprietor: Nippon Seiki Co., Ltd., Nagaoka-shi, Niigata 940-8580 (JP)
(72) Inventor: OKADA,Yuji, Nagaoka, Niigata (JP)
(74) Representative: Carpmaels & Ransford LLP
(86) International application number: PCT/JP2014/059807
(87) International publication number: WO 2014/168067

(56) References cited:
- WO-A1-2012/102087
- JP-A- H07 181 471
- JP-A- 2009 069 321
- JP-A- 2011 170 169
- JP-A- 2012 173 489

## Description

### TECHNICAL FIELD

The present invention relates to a display device mounted in a vehicle such as a motor vehicle.

### BACKGROUND ART

Conventionally, as a display device of this type, there is known such a device as described in Patent Literature 1 listed below, for example. This display device described in Patent Literature 1 is composed of vehicular gauges mounted in a vehicle, and is configured to include: a liquid crystal display panel (display means) having a rectangular display element in which a display area capable of displaying predetermined information is provided; and a display plate (a protection member) which is arranged at a front side of the liquid crystal display panel so as to cover the liquid crystal display panel and is joined with the panel by way of a light transmitting spacer (a transparent resin) filled in a gap formed between the liquid crystal display panel and the display plate.

In this case, the display plate is formed of a transparent synthetic resin material, and at a surface side thereof, an indication part such as a scale or characters constituting a speed meter is provided so that the indication part can be used in a vehicular gauge, and further, on a face, which opposes to the liquid crystal display panel, of the display plate, a frame-shaped light shielding layer which corresponds to a region outside the display area and which does not transmit light is formed.

Therefore, when an attempt is made to view a display device straight on from a viewer side, the viewer can see (visually recognize) the predetermined information through a visualization part area of the display plate in which a light shielding layer is not formed. Also, the light shielding layer of the display plate has a function to hide a frame body made of a metal frame in which a display window part is formed to be opened so as to correspond to the display area of the display element.

WO2012/102087A1 describes a liquid crystal display device comprising a case body, a liquid crystal display element and a display panel. The display panel comprises a light-transmissive substrate as a base material. On the back of the light-transmissive substrate, a ground color part made of a blacked print layer is formed by printing. The central area of the ground color part corresponds to the display portion of the liquid crystal display element. The case body comprises a frame-shaped base part to support the liquid crystal display element and display panel. A clearance between the central area of the display panel and the liquid crystal display element is set to be several millimeters.

### CITATION LIST

### PATENT LITERATURE

Patent Literature 1: Japanese Unexamined Patent Application Publication No. 2011-22523

### SUMMARY OF THE INVENTION

### PROBLEMS TO BE SOLVED BY THE INVENTION

Incidentally, in the case of the display device with a frame body made of the metal frame as described above, in general, when the display device is viewed straight on from the viewer side, the frame body and the light shielding layer of the display plate are configured so as to completely overlap with each other.

In such a configuration, when the liquid crystal display panel and the display plate are joined with each other by way of the light transmitting spacer, a position of the display plate with respect to the liquid crystal display panel is prone to be shifted, for example, if the position shift of the display plate arises at the time of jointing, when the display device is viewed straight on from the viewer side, there arises an abnormality on appearance that a part of the frame body made of the metal frame that should not be essentially visually recognized from the viewer side is visually recognized through the visualization part area, which has been a cause of degradation of merchantability. It is to be noted that the part of the frame body described above means a visually exposed part of the frame body exposed at a minute width from one inner peripheral face of the frame-shaped light shielding layer.

Accordingly, the present invention has been made in order to cope with the problem described previously, and it is an object of the present invention to provide a display device which is capable of increasing the merchantability.

### MEANS TO SOLVE THE PROBLEMS

There is provided a display device, including: display means having a display element in which a display area capable of displaying predetermined information is provided; and a protection member which covers the display means and is joined with the display means by way of a transparent resin, wherein the protection member includes: a light transmitting board constituting a base member of the protection member; and a non-transmitting part formed on the light transmitting board so as to overlap with a peripheral edge part of the display area when the display device is viewed straight on from a viewer side, and the peripheral edge part and a pixel provided at a part of the display area that is positioned inside of the peripheral edge part is displayed to be colored so as to have a color tone similar to a color tone of the non-transmitting part.

### EFFECT OF THE INVENTION

According to the present invention, it is possible to provide a display device which is capable of achieving an intended object and increasing merchantability.

### BRIEF DESCRIPTION OF THE DRAWINGS

[Fig. 1] Fig. 1 is a front view of a display device according to an embodiment of the present invention.
[Fig. 2] Fig. 2 is a sectional view taken along the line A-A of Fig. 1.
[Fig. 3] Fig. 3 is an enlarged sectional view showing the part B in an enlarged manner in Fig. 2.
[Fig. 4] Fig. 4 is a front view of essential parts of a display element, showing the part C in enlarged manner in Fig. 1.
[Fig. 5] Fig. 5 is a sectional view showing a positional relationship among the display element, a protection member, and a transparent resin, according to the embodiment.
[Fig. 6] Fig. 6 is a sectional view showing a positional relationship among the display element, the protection member, and the transparent resin, when the protection member according to the embodiment is positionally shifted.
[Fig. 7] Fig. 7 is a front view of essential parts of a display element according to a modification example of the embodiment.
[Fig. 8] Fig. 8 is a front view of essential parts of the display element in a case where a color display area according to the modification example of the embodiment is not formed.
[Fig. 9] Fig. 9 is a view schematically showing a state in which a gradation area is formed in a display area according to another modification example of the embodiment.

### MODE FOR CARRYING OUT THE INVENTION

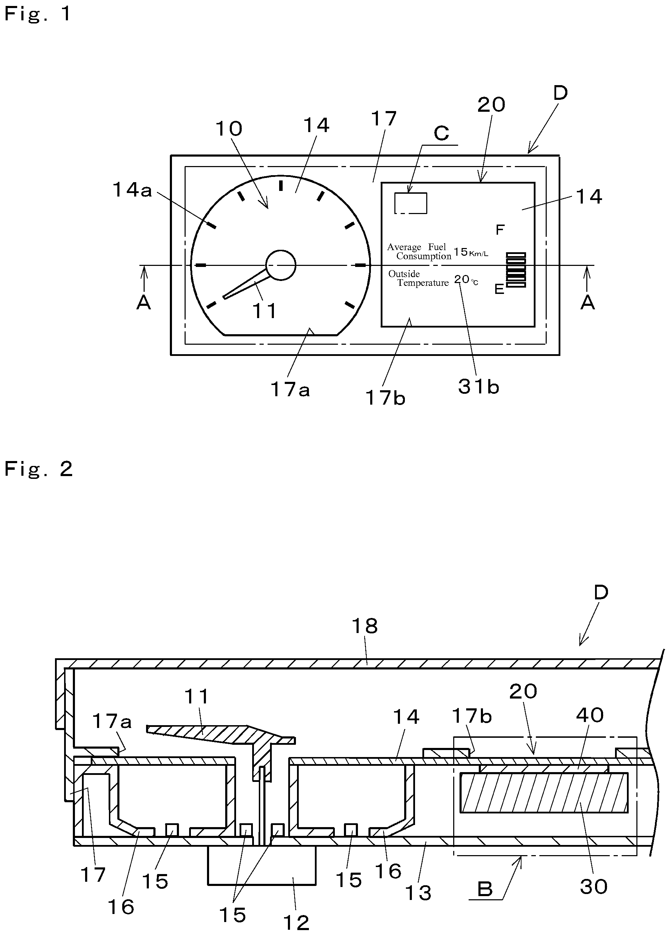

Hereinafter, with reference to Fig. 1 to Fig. 6, a case in which an embodiment of the present invention is applied to a vehicular gauge mounted on a vehicle will be described by way of example.

In Fig. 1, a vehicular gauge D as a display device according to the present embodiment is provided with: a needle type display part 10 made of a speed meter and displaying a speed of a motor vehicle; and a display unit 20 to display a variety of information, and is configured so that the needle type display part 10 and the display unit 20 mentioned above are arranged in parallel to each other.

The needle type display part 10 as a speed meter, as shown in Fig. 2, is mainly composed of: an indicator 11; a driving device 12 made of a gauge movement and actuating the indicator 11; a wiring board 13 which is obtained by electrically conductively mounting the driving device 12; and a display plate 14 which is positioned between the indicator 11 and the wiring board 13 and which has an indication part 14a such as scale or numerals indicated by the indicator 11, and the display plate 14 mentioned herein is configured so as to cover display means, which will be described later, of a display unit provided in parallel to the needle type display part 10. Also, on the wiring board 13 provided at a back side of the display plate 14, a plurality of light emitting elements 15 corresponding to the indicator 11 and the display plate 14 are mounted.

In addition, in this case, the indicator 11 is made of a light transmitting material which is capable of emitting light while being exposed to the light that is emitted by turning on the light emitting element 15, and the indication part 14a of the display plate 14 (refer to Fig. 1) is made of a light transmitting material so as to emit light while being exposed to the light that is emitted by turning on the light emitting element 15.

The wiring board 13 is made of a hard circuit board obtained by applying a wiring pattern (not shown) to a glass epoxy-based substrate, for example, and those which are electrically conductively connected to the wiring pattern are: the driving device 12; the light emitting element 15; a second connector 13a; control means (not shown) that drives and controls the driving device 12 and the light emitting element 15 and outputs a command signal for displaying and operating a display element, which will be described later, included in the display unit 20 or another command signal for displaying and operating a light source, which will be described later, included in the display unit 20; and a variety of circuit parts (not shown) such as a resistor or a capacitor.

Further, at front side of the wiring board 13, for example, a casing body 16 made of a white synthetic resin is provided. In this casing body 16, a plurality of illumination chambers to house the light emitting element 15 and guide the light toward the indicator 11 and the display plate 14 are formed.

In front of the casing body 16, an end leaf member 17 is disposed while the display plate 14 is sandwiched therebetween. In this end leaf member 17, a first window part 17a to expose a visual area (namely, the indicator 11 and the indication part 14a) of the needle type display part 10; and a second window part 17b to expose a part of the display plate 14 corresponding to the display unit 20 are formed. In front of the end leaf member 17, a transparent or semitransparent visualization panel 18 is disposed.

The display unit 20 is provided with: display means 30; the abovementioned display plate 14 as a protection member which is disposed at the front side of this display means 30; and a transparent resin 40 made of an optical adhesive, and is configured such that the display means 30 and the display plate 14 are joined with each other by way of the transparent resin 40 that is filled into the gap formed between the display means 30 and the display plate 14.

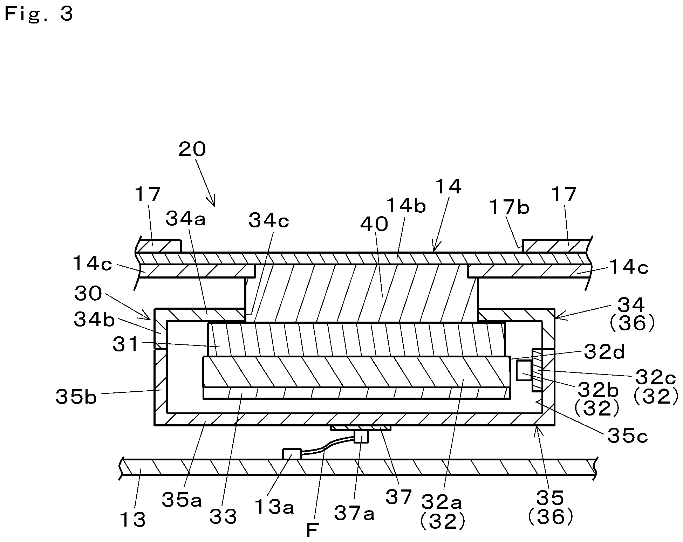

The display means 30, as shown in Fig. 3, is provided with: a display element 31 in which a display area, which will be described later, is provided; a source line driving circuit (not shown) to drive a source line (a signal line) of the display element 31; a gate line driving circuit (not shown) to drive a gate line (a scanning line) of the display element 31; illumination means 32 which is composed of a light guide 32a, a light source 32b and a first flexible wiring board 32c or the like, for guiding illumination light to the display element 31; a resin case 33 made of a substantially flat plate-shaped white resin to hold the display element 31 and the light guide 32a; a frame body 36 composed of a front face frame 34 and a rear face frame 35 and made of an electrically conductive material constituting an exterior casing of the display means 30; and a printed wiring board 37 on which a timing controller (not shown) or the like to generate a variety of timing signals to control timings of the source line driving circuit and the gate line driving circuit is mounted.

In addition, in this case, the metallic frame body 36, which is composed of the front face frame 34 and the rear face frame 35 paired with the front face frame 34, houses (accommodates) therein the display element 31 and the light guide 32a, the light source 32b, and the resin case 33 or the like. The printed wiring board 37 is fixed, by appropriately employing fixing means, to a rear face of a bottom face part, which will be described later, of the rear face frame 35.

It is to be noted that, as required, one or more optical means for substantially uniformly illuminate the display element 31 with backlight (for example, a scattering sheet or a prism sheet) may be disposed between the display element 31 and the light guide 32a.

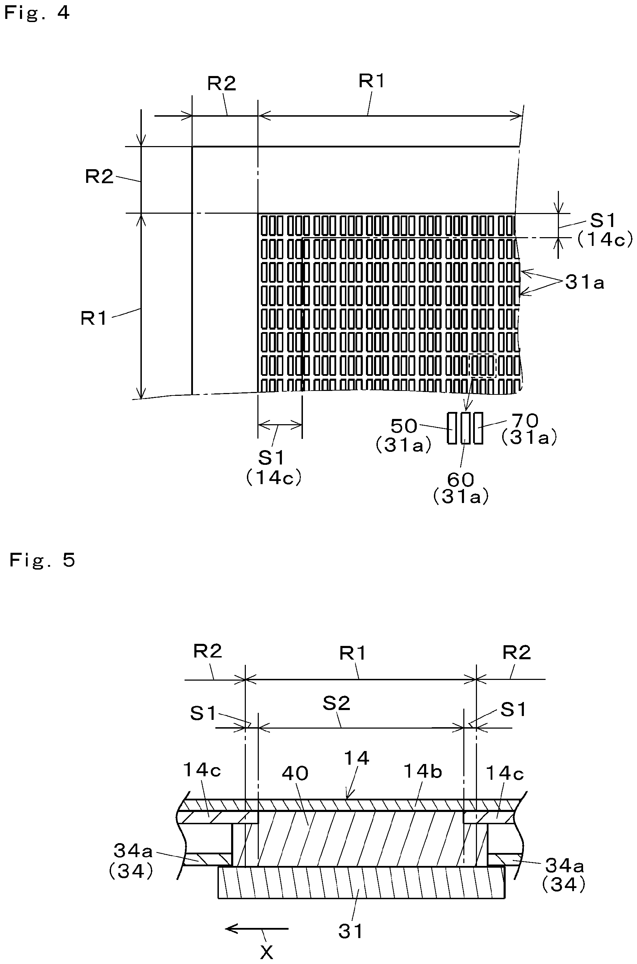

The display element 31 is composed of a TFT-type liquid crystal display panel of a dot matrix type having a plurality of pixels 31a, for example, and is provided with a display area R1 which is capable of displaying vehicle information (predetermined information) 31b such as engine speed or average fuel consumption, fuel consumption, or ambient temperature, based on a detection signal from a variety of sensors which are mounted in a vehicle (refer to Fig. 1 and Fig. 4).

It is to be noted that, in the case of this example, as shown in Fig. 4, one pixel 31a is composed of three subsidiary pixels, an R pixel 50, a G pixel 60, and a B pixel 70, and this pixel 31a is provided in plurality (multiply) in a matrix manner in the display area R1 of the display element 31.

The light guide 32a is made of a substantially flat plate-shaped synthetic resin, and is disposed so as to be taken along a rear face of the display element 31. In other words, the light guide 32a is disposed in an illumination light path leading from the light source 32b to the display element 31.

The light source 32b is composed of chip type light emitting diodes to appropriately emit color, and is made of light emitting members which are disposed to be arranged in plurality so as to be taken along one side face 32d positioned at a right side of the light guide 32a to supply illumination light to the display element 31, in Fig. 3.

The front face frame 34 is made of an electrically conductive member, and is configured so that: a front face part 34a press-molded in a substantial frame shape and forming an essential part thereof; and a first peripheral wall part 34b formed to be suspended from a peripheral edge of the front face part 34a toward a lower side are formed integrally with each other. In addition, at a substantial center part of the front face part 34a, a display window part 34c made of a substantially rectangular opening window is formed so as to correspond to the display part 31d.

The rear face frame 35 is made of an electrically conductive material in the same manner as in the front face frame 34, and is configured so that a bottom face part 35a, which is formed in a sectional substantially recessed shape and forming an essential part thereof, and a second peripheral wall part 35b, which is formed to be protruded from a peripheral edge of this bottom face part 35a toward the first peripheral wall part 34b, are formed integrally with each other.

In addition, on an interior wall face 35c of the second peripheral wall part 35b, which is positioned at a right side in Fig. 3, a first flexible wiring board 32c is fixed by appropriately employing fixing means, and each light source 32b is mounted on an electrically conducting path (not shown) which is provided on the first flexible wiring board 32c so as to oppose to one side face 32d of the light guide 32a.

It is to be noted that, in Fig. 3, reference numeral 37a designates a first connector to be mounted on the printed wiring board 37, and this first connector 37a and a second connector 13a which is mounted on the wiring board 13 are electrically conductively connected by way of a second flexible wiring board F.

Also, the display plate (the protection member) 14 to cover the display means 30 has: a flat plate-shaped light transmitting board 14b made of polycarbonate which is a base member thereof; and a non-transmitting part 14c made of a black light shielding layer to be formed to be printed on a rear face of this light transmitting board 14b.

The non-transmitting part 14c, as shown in Fig. 5, is formed to be printed on the rear face of the light transmitting board 14b so as to correspond to a non-display area R2 except the substantially rectangular display area R1 and to a peripheral edge part S1 of the display area R1 that is positioned inside of the non-display area R2. Here, focusing on a positional relationship between the non-transmitting part 14c and the peripheral edge part S1 of the display area R1, it is possible to say that the non-transmitting part 14c is formed to be printed on the rear face of the light transmitting board 14b so as to overlap with the peripheral edge part S1 of the display area R1 when the vehicular gauge D is visually recognized (viewed straight on) from the viewer side.

In addition, in this case, a part of the light transmitting board 14b corresponding to a part of the display area R1 that is positioned inside of the peripheral edge part S1 (namely, a valid display area designated by reference numeral S2 in Fig. 5) is obtained as a print-free part at which the non-transmitting part 14c made of the light shielding layer mentioned above is not formed. It is to be noted that the non-transmitting part 14c also has a function as a hiding part such that when the vehicular gauge D is visually recognized (viewed straight on) from the viewer side, the metallic frame body 36 (the front face frame 34) is made invisible.

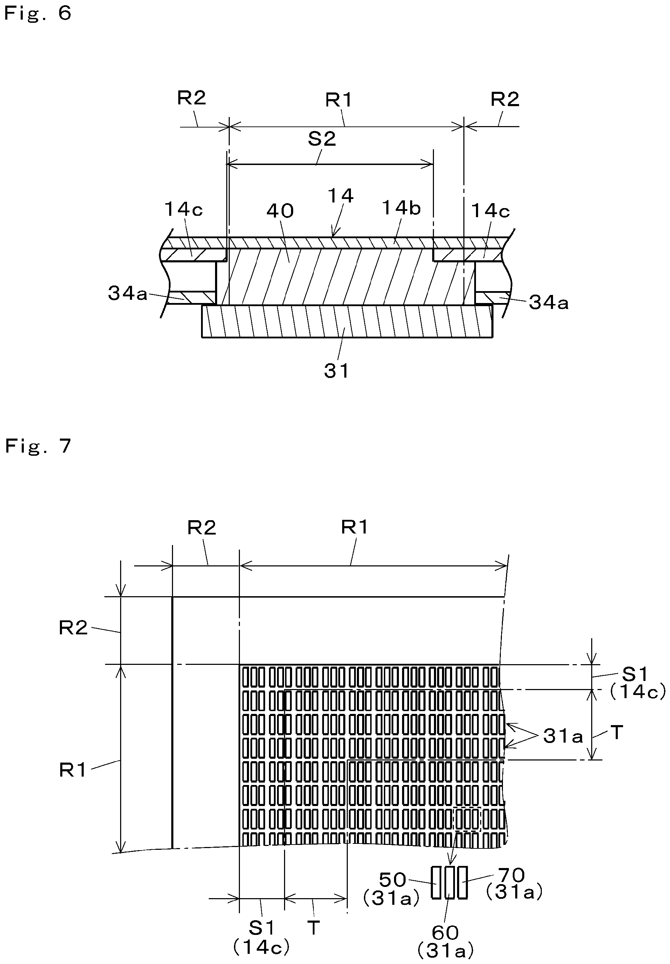

Incidentally, Fig. 6 shows a state in which, when the display element 31 and the display plate 14 are joined with each other by way of the transparent resin 40, the position of the display plate 14 with respect to the display element 31 is shifted for any reason on the order of several millimeters in the direction indicated by the arrow X from the state shown in Fig. 5. Here, in the case of the present embodiment, even in a case where the position of the display plate 14 is shifted as shown in Fig. 6, due to the fact that, when the vehicular gauge D is viewed straight on from the viewer side, the non-transmitting part 14c is formed on the light transmitting board 14b so that the non-transmitting part 14c overlaps with the peripheral edge part S1 of the display area R1, it is possible to prevent an occurrence of an abnormality on appearance that a part of the frame body 36 (the front face part 34a in the front face frame 34) is visually recognized through the valid display area S2 as a visualization part area, and it is also possible to provide a display device with a high merchantability.

Also, although a detailed description is omitted hereinafter, the non-transmitting part 14c is continuously provided at a position close to the needle type display part 10 as well as at a position close to the display means 20. At the position close to the needle type display part 10, the non-transmitting part 14c is formed to be printed at a rear part of the light transmitting board 14b except the region in which the indication part 14a is formed as described above. It is to be noted that the non-transmitting part 14c may be formed at a surface part of the light transmitting board 14b except the valid display area S2.

The transparent resin 40 is made of an optical adhesive (for example, a liquid silicone-based adhesive) which is filled into the gap formed between the display means 30 and the light transmitting board 14b, a thickness thereof is on the order of 300 microns to 1,000 microns, and an index of refraction thereof is 1.45 to 1.55, which is set to be substantially equal to an index of refraction of the light transmitting board 14b that is formed of polycarbonate.

Also, when the display plate 14 and the display means 30 are joined with each other, the transparent resin 40 is applied to at least one of the display plate 14 and the display means 30, and then, the display plate 14 and the display means 30 are bonded with each other by employing the transparent resin 40, and subsequently, the transparent resin 40 is hardened (UV-cured), whereby the display unit 20 composed of the display plate 14, the display means 30, and the transparent resin 40 can be obtained.

In addition, after the transparent resin 40 has been hardened, the transparent resin 40 is obtained as an adhesive to absorb stretching due to a difference in linear expansion coefficient between the light transmitting board 14b that is obtained as an adhesive part to come into intimate contact with (adhere to) the transparent resin 40 and a front side polarizing member (not shown) which is provided at a front face side of the display element 31 and to harden in a shape of gel having an adhesive force (an elastic adhesive force) to an extent such that no releasing arises with the adhesive part (namely, an adhesive face between the transparent resin 40 and the light transmitting board 14b or the front side polarizing member). It is to be noted that, as required, a weir-shaped part (not shown) made of a sealing member may be embedded between the non-transmitting part 14c and the front face part 34a so as to surround the transparent resin 40 so that the transparent resin 40 does not flow out toward the outside of the display means 30 (for example, toward the needle type display part 10).

The vehicular gauge D is composed of the constituent elements as mentioned above. In such a configuration, the viewer who visually recognizes the vehicular gauge D can visually recognize (transmit) the vehicle information 31b that is displayed in the valid display area S2 of the display element 31, through the transparent resin 40, the light transmitting board 14b, and the visualization panel 18.

As described above, in the present embodiment, in the vehicular gauge D including: the display means 30 having the display element 31 in which the display area R1 capable of displaying the vehicle information 31b is provided; and the display plate (the protection member) 14 which covers the display means 30 and is joined with the display means 30 by way of the transparent resin 40 filled in the gap formed between the display means 30 and the display plate 14, the display plate 14 is provided with the light transmitting board 14b which is a base member of the display plate 14; and the non-transmitting part 14c formed on the light transmitting board 14b to overlap with the peripheral edge S1 of the display area R1. In this manner, when the display element 31 and the display plate 14 are joined with each other by employing the transparent resin 40, even in a case where the position of the display plate 14 with respect to the display element 31 is shifted for any reason, it is possible to eliminate an abnormality on appearance that a part of the frame body 36 (the front face part 34a) is visually recognized through the valid display area S2, and it is also possible to provide a display device with a high merchantability.

In addition, although the present embodiment described an example in which, when the vehicular gauge D is viewed straight on from the viewer side, the peripheral edge part S1 of the display area R1 and the non-transmitting part 14c overlap with each other, for example, as shown in Fig. 7 as a modification example of the present embodiment, it may be that all of the parts of the pixel 31a indicated in a range of reference code T which is equivalent to the color display area (namely, the peripheral edge part S1 of the display area R1 and the pixel 31a that is positioned slightly more inward than the peripheral edge part S1) are displayed in black.

In this case, for example, in the pixel 31a in the range of the color display area T, all of the R pixel 50, the G pixel 60, and the B pixel 70 are placed in a non-display mode (turned off), whereby the color display area T that is displayed in black can be obtained. Therefore, according to the foregoing modification example of the present embodiment, the peripheral edge part S1 and the pixel 31a provided at a part of the display area R1 positioned inside of the peripheral edge part S1 is configured to be colored and displayed in black so as to have a same (similar) color as black which is a tone of the non-transmitting part 14c.

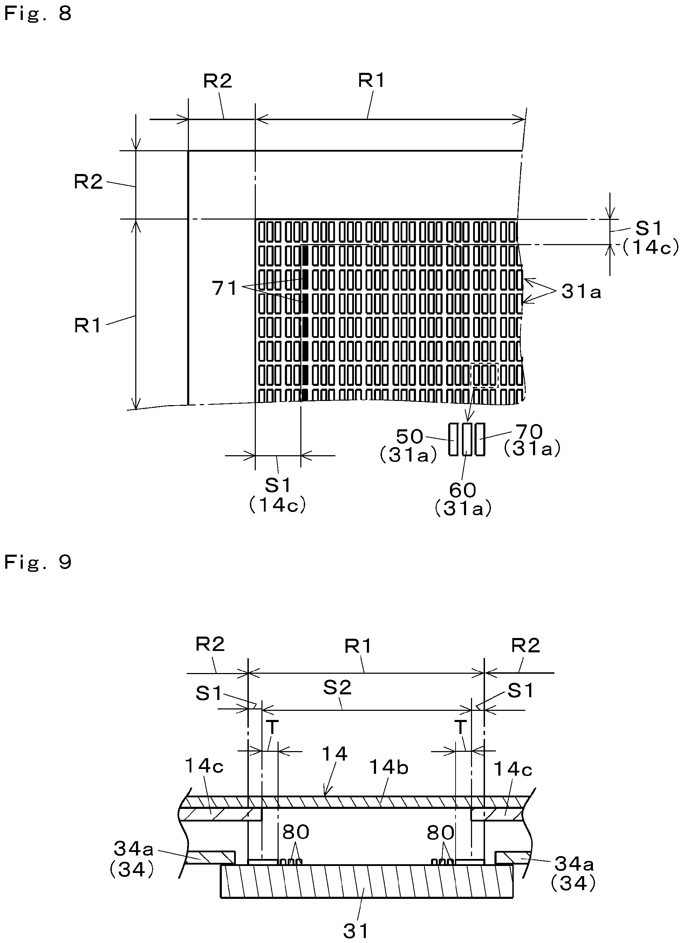

Here, as shown in Fig. 8, for example, on the presupposition that the color display area T is not provided, in a case where a background color of the vehicle information 31b, which will be displayed as a background color in the display area R1, is white in color obtained when all of the R pixel 50, the G pixel 60, and the B pixel 70 are turned on, and in Fig. 8, among the pixels 31a that are formed to be arrayed along a longitudinal direction, only the R pixel 50 and G pixel 60 of the pixels 31a that are positioned in the vicinity of a boundary between the peripheral edge part S1 and the valid display area S2 are covered with the non-transmitting part 14c, in essential, a longitudinal line-shaped black line 71 (indicated by the filled part in Fig. 8), which should not be visually recognized from the viewer side, is displayed at a leftward side of the display area R1 so as to be taken along the non-transmitting part 14c, and the quality on appearance thereof may be degraded.

In contrast to this, as in the modification example of the present embodiment shown in Fig. 7 described above, the peripheral edge part S1 and the pixel 31a that is provided at the site of the display area R1 that is positioned inside of the peripheral edge part S1 are displayed to be colored in black so as to a tone of the same (similar) color as black which is the tone of the non-transmitting part 14c, whereby all of the pixels 31a that are positioned in the color display area T are displayed in black, and the blue line 71 that has been a cause of the degradation of the quality on appearance described above is never displayed, and thus, it is possible to provide a display device with a good quality on appearance. It is to be noted that, in Fig. 7, a dimensional value obtained by adding the peripheral edge part S1 and the color display area T to each other is twice or more of a dimensional value of the peripheral edge part S1.

In addition, although the foregoing modification example described an example where the pixel 31a positioned in the color display area T is displayed in black, for example, as shown in Fig. 9 as another modification example of the present embodiment, there may be a gradation area 80 in which a part of the display area R1 (a part of the valid display area S2) along the inside of the color display area T that is displayed to be colored (displayed in black) gradually varies from black which is a tone of the color display area T to a background color forming a background of the vehicle information 31b (herein, referred to as a white background color obtained when all of the R pixel 50, the G pixel 60, and the B pixel 70 are turned on). In this case, the gradation area 80 gradually varies in order of black, grey, and white in brightness thereof, as the area goes from the color display area T to the inside.

### INDUSTRIAL APPLICABILITY

The present invention is applicable to a display device in which: display means having a display element in which a display area capable of displaying predetermined information is provided; and a protection member to cover this display means are joined with each other by way of a transparent resin.

### DESCRIPTION OF REFERENCE NUMERALS

- 10: Needle type display part
- 11: Indicator
- 13: Wiring board
- 14: Display plate (protection member)
- 14a: Display part
- 14b: Light transmitting board
- 14c: Non-transmitting part
- 30: Display means
- 31: Display element
- 31a: Pixel
- 31b: Vehicle information (predetermined information)
- 32: Illumination means
- 34: Front face frame
- 35: Rear face frame
- 36: Frame body
- 40: Transparent resin
- 50: R pixel
- 60: G pixel
- 70: B pixel
- 80: Gradation area
- R1: Display area
- R2: Non-display area
- S1: Peripheral edge part
- S2: Valid display area
- T: Color display area

## Claims

1. A display device, comprising:
display means (30) having a display element (31) in which a display area (R1) capable of displaying predetermined information is provided; and
a protection member (14) which covers the display means (30) and is joined with the display means (30) by way of a transparent resin (40),
wherein the protection member (14) comprises:
a light transmitting board (14b) constituting a base member of the protection member (14); and
a non-transmitting part (14c) formed on the light transmitting board (14b) so as to overlap with a peripheral edge part (S1) of the display area (R1) when the display device is viewed straight on from a viewer side, and
the peripheral edge part (S1) and a pixel (31a) provided at a part of the display area (R1) that is positioned inside of the peripheral edge part (S1) is displayed to be colored so as to have a color tone similar to a color tone of the non-transmitting part (14c).

2. The display device according to claim 1, wherein the color tone of the non-transmitting part (14c) is black, and the color tone of the peripheral edge part (S1) and the pixel (31a) is black.

## Patentansprüche

1. Anzeigevorrichtung, die Folgendes umfasst:
ein Anzeigemittel (30), das ein Anzeigeelement (31) aufweist, in welchem ein Anzeigegebiet (R1) vorgesehen ist, das in der Lage ist zum Anzeigen von vorbestimmten Informationen; und
ein Schutzbauteil (14), welches das Anzeigemittel (30) abdeckt und mit dem Anzeigemittel (30) mittels eines transparenten Harzes (40) verbunden ist;
wobei das Schutzbauteil (14) Folgendes umfasst:
eine lichtdurchlässige Platte (14b), die ein Basisbauteil des Schutzbauteils (14) darstellt; und
ein undurchlässiges Teil (14c), das auf der lichtdurchlässigen Platte (14b) ausgebildet ist, so dass es mit einem Umrandungsteil (S1) des Anzeigegebiets (R1) überlappt, wenn die Anzeigevorrichtung von einer Betrachterseite gerade von vorne betrachtet wird, und
wobei das Umrandungsteil (S1) und ein Pixel (31a), das an einem Teil des Anzeigegebiets (R1) vorgesehen ist, das im Innern des Umrandungsteils (S1) positioniert ist, als farbig angezeigt werden, um somit einen Farbton aufzuweisen, der einem Farbton des undurchlässigen Teils (14c) ähnlich ist.

2. Anzeigevorrichtung nach Anspruch 1, wobei der Farbton des undurchlässigen Teils (14c) schwarz ist und der Farbton des Umrandungsteils (S1) und des Pixels (31a) schwarz ist.

## Revendications

1. Dispositif d'affichage, comprenant :
des moyens d'affichage (30) comportant un élément d'affichage (31) dans lequel est prévue une zone d'affichage (R1) capable d'afficher des informations prédéterminées ; et
un élément de protection (14) qui couvre les moyens d'affichage (30) et est relié aux moyens d'affichage (30) par l'intermédiaire d'une résine transparente (40),
l'élément de protection (14) comprenant :
un panneau de transmission de lumière (14b) constituant un élément de base de l'élément de protection (14) ; et
une partie de non transmission (14c) formée sur le panneau de transmission de lumière (14b) de façon à se chevaucher avec une partie de bord périphérique (S1) de la zone d'affichage (R1) lorsque le dispositif d'affichage est vu de face depuis un côté observateur, et
la partie de bord périphérique (S1) et un pixel (31a) prévu sur une partie de la zone d'affichage (R1) qui est positionnée à l'intérieur de la partie de bord périphérique (S1) sont affichés pour être colorés de façon à présenter une nuance de couleur similaire à une nuance de couleur de la partie de non transmission (14c).

2. Dispositif d'affichage selon la revendication 1, dans lequel la nuance de couleur de la partie de non transmission (14c) est noire, et la nuance de couleur de la partie de bord périphérique (S1) et du pixel (31a) est noire.
